# EUROPEAN PATENT APPLICATION

(11) **EP 1 130 079 A1**
(43) Date of publication of application: **05.09.2001**
(21) Application number: 99940492.4
(22) Date of filing: 26.08.1999
(51) Int. Cl.: C10G 45/60, B01J 27/053

(54) **METHOD OF ISOMERIZING HYDROCARBON**

(30) Priority: 26.08.1998 JP 24023398
(71) Applicant: JAPAN ENERGY CORPORATION, Tokyo 105-0001 (JP)
(72) Inventor: AIMOTO, Kohjiroh, Japan Energy Corporation, Toda-shi, Saitama 335-0026 (JP); MATSUZAWA, Kenji, Japan Energy Corporation, Toda-shi, Saitama 335-0026 (JP)
(74) Representative: Schwabe - Sandmair - Marx
(86) International application number: JP9904603
(87) International publication number: WO0012652

(57) **Abstract**

An object of the present invention is to provide a method for isomerizing raw materials which does not require a special desulfurization or other pre-treatments to be performed and a method for bringing about hydrocarbon isomerization reactions using hydrogen that contains sulfur compounds. The isomerization method is characterized in that isomerized hydrocarbons are obtained by bringing hydrogen and raw material hydrocarbons which contain 10 to 500 ppm, in terms of sulfur weight content, of sulfur compounds, into contact with a solid acid catalyst comprising a support, which comprises portions made of zirconia and/or hydrous zirconia, and a sulfureous component supported on the support. It is preferable that the isomerized hydrocarbons contain no more than 10 ppm, in terms of sulfur weight content, of an organic sulfur compound.

## Description

### TECHNICAL FIELD

The present invention relates to a method for isomerizing sulfur compound-containing hydrocarbons, using a sulfated-zirconia solid acid catalyst, and to a isomerizing solid acid catalyst used therefor.

### BACKGROUND ART

Methods for manufacturing high octane gasoline base materials and chemical raw materials require the hydrocarbons in the petroleum fractions, etc. to be subjected to an isomerization reaction. The isomerization of normal butane in particular is a critical reaction in methods for manufacturing isobutane, which is a raw material for methyl-tert-butyl ether and alkylate gasoline, as is the isomerization of light naphtha in methods for manufacturing gasoline base materials.

In the past, hydrocarbon isomerization has been carried out by bringing platinum-chlorinated alumina, platinum-zeolite or another catalyst, which has been obtained by modifying an oxide exhibiting solid acid properties with platinum, into contact with hydrocarbons in the presence of hydrogen. The impurities contained in the reaction raw materials are known to decrease the activity of such catalysts. It is known that if the reaction raw materials contain sulfur compounds in a concentration of several tens of ppm, in particular, the catalytic activity will severely deteriorate.

Several ten ppm to several hundred ppm of sulfur compounds are normally contained in the petroleum fractions distilled out of the crude oil. In a majority of cases, the sulfur compounds are contained in the hydrocarbons and hydrogen produced from the petroleum refining or petrochemical processes. In order to use such hydrocarbons in isomerization reactions, a pre-treatment must be performed in order to reduce the concentration of sulfur compounds to a level which shall not adversely affect the reaction.

### DISCLOSURE OF THE INVENTION

As a consequence, special equipment is required for performing the pre-treatment, in order to isomerize hydrocarbons which contain sulfur compounds as impurities, as in petroleum fractions. Such a drawback is resolved with the present invention, which provides a method for isomerizing raw materials in which special pre-treatments are not performed and a method for conducting isomerization reactions on hydrocarbons using sulfur compound-containing hydrogen, as well as a catalyst for use in these methods.

The inventors of the present invention conducted diligent research, and, as a result, completed the present invention by discovering that hydrocarbon isomerization reactions can be conducted even in the presence of sulfur compounds with virtually no adverse effect arising therefrom, through the employment of a solid acid catalyst that contains a support, which comprises portions made of zirconia and/or hydrous zirconia, and a sulfureous component which is supported on the support.

More specifically, the method for isomerizing hydrocarbons according to the present invention comprises obtaining isomerized hydrocarbons by bringing raw material hydrocarbons and hydrogen, which contain 10 to 500 ppm, in terms of sulfur weight content, of sulfur compounds, into contact with a solid acid catalyst comprising a support, which comprises portions made of zirconia and/or hydrous zirconia, and a sulfureous component which is supported on the support, wherein the organic sulfur compound content in the isomerized hydrocarbons is preferably no more than 10 ppm as a sulfur weight content. It is preferable for the solid acid catalyst to contain at least one metal component selected from the group consisting of Groups 8, 9 and 10 and/or for the support to comprise portions made of zirconia and/or hydrous zirconia and portions made of alumina and/or hydrous alumina.

The isomerization solid acid catalyst according to the present invention comprises a support, which comprises portions made of zirconia and/or hydrous zirconia, and a sulfureous component which is supported on the support, and is used for the isomerization of hydrocarbons for obtaining isomerized hydrocarbons by bringing raw material hydrocarbons and hydrogen, which contain 10 to 500 ppm, in terms of sulfur weight content, of sulfur compounds, into contact with the aforedescribed solid acid catalyst.

### BEST MODE FOR CARRYING OUT THE INVENTION

### [Raw material hydrocarbons]

Light or whole naphtha which has been obtained by the distillation separation of crude oil, or butane which has been obtained using a fluid catalytic cracking apparatus, and the like can be used as the raw material hydrocarbons which are the object of the isomerization pertaining to the present invention. A single hydrocarbon compounds or mixtures of a plurality of compounds with a boiling point range from -20°C to 120°C, particularly from -5°C to 110°C, are preferable. [Conditions for the isomerization reaction]

The conditions for the isomerization reaction of the present invention will vary depending on the catalyst to be used as well as on the objective of the reaction. Normally, a preferable reaction temperature range is 100°C to 300°C, and particularly preferably 120°C to 260°C; a preferable reaction pressure range is 1 to 50 kgf/cm², and particularly preferably 15 to 40 kgf/cm²; a preferable liquid hourly space velocity (LHSV) range is 0.2 to 10/hr; and a preferable range for the hydrogen/(hydrocarbon raw material) ratio is 0.1 to 10 mol/mol.

A reduction process can be performed with hydrogen on the solid acid catalyst used prior to the isomerization reaction. The process temperature in such a case is preferably lower than 300°C, and particularly preferably lower than 250°C. If the treatment temperature is too high, then the sulfureous component in the catalyst will reduce, causing a decrease in the catalytic activity. However, as long as the reaction is conducted in a hydrogen atmosphere, the reduction process can be omitted; accordingly, such a reduction process is not mandatory. Nor will it matter, moreover, if the catalyst is treated with an oxidising gas such as air prior to the reduction.

### [Sulfur compounds]

The total concentration of the sulfur compounds contained in the hydrogen and raw material hydrocarbons used in the reaction in the isomerization method of the present invention is, in terms of sulfur, 10 to 500 ppm by weight, preferably 20 to 500 ppm by weight, and particularly desirably 20 to 300 ppm by weight. The product of the isomerization method according to the present invention will have a sulfur component, chiefly as hydrogen sulfide, originating from the raw material, with any organic sulfur compounds being virtually non-existent. The content of organic sulfur compounds in the isomerized hydrocarbons will normally is, in terms of sulfur weight content, no more than 10 ppm by weight, and preferably no more than 3 ppm by weight. Moreover, the organic sulfur compounds contained in the hydrocarbons can be separated from the hydrogen sulfide and analysed using a gas chromatograph fitted with an atomic emission detector (AED).

### [Solid acid catalyst]

A conventional solid acid catalyst known as sulfated-zirconia system (a solid acid catalyst comprising a support, which comprises portions made of zirconia and/or hydrous zirconia, and a sulfureous component supported on the support) can be used as the solid acid catalyst to be employed in the present invention. Other metal components may also be included in the portions made of zirconia and/or hydrous zirconia, provided that they are used in a range which does not impair the effects contemplated by the present invention. Examples of such other metals include titanium, hafnium, vanadium, chromium, manganese, iron, silicon, tin and gallium and these metals may be used in the form of a composite oxide and/or hydrous composite oxide which may be mixed with portions of a single oxide and/or hydrous oxide. The amount of portions made of zirconia and/or hydrous zirconia in the weight of the catalyst is preferably 20 to 99 wt % and particularly preferably 50 to 99 wt %.

The amount of sulfureous component contained in the solid acid catalyst is preferably 0.2 to 10 wt % with respect to the sulfur content, and particularly preferably 1 to 10 wt %. Platinum, palladium, ruthenium and nickel are preferably used as the metal component selected from Groups 8, 9 and 10, and the total amount of these metals of Groups 8, 9 and 10 contained in the solid acid catalyst is preferably being added to comprise 0.05 to 10 wt %.

It is preferable for the crystalline structure of the portions made of zirconia and/or hydrous zirconia in the catalyst used in the present invention to be tetragonal. A partially monoclinic structure is also possible. The structure can be ascertained by X-ray diffractometry. More specifically, the ratio between the 2θ = 28.2° and 2θ = 30.2° peaks (hereinafter, abbreviated as "S28.2/S30.2 ratio", wherein S28.2 refers to the area of a peak assignable to monoclinic zirconia at 2θ = 28.2°, while S30.2 refers to the area of a peak assignable to tetragonal zirconia) at 2θ = 30.2° as determined by X-ray diffractometry with CuK α radiation is preferably no more than 1.0 and particularly preferably no more than 0.05. The presence of a smaller amount of monoclinic zirconia gives a higher catalytic activity.

### [Preferably used solid acid catalysts]

Catalysts comprising a support that is constituted from portions made of zirconia and/or hydrous zirconia and portions made of alumina and/or hydrous alumina, a sulfureous component which is supported on the support and a metal component selected from Groups 8, 9 and 10 are preferably used in the isomerization reaction of the present invention. It is preferable for the catalyst to be prepared by kneading aluminum hydroxide and/or hydrated oxide, zirconium hydroxide and/or hydrated oxides and a sulfur-containing compound, shaping the kneaded mixture, calcining the shaped material at such a temperature as to form tetragonal zirconia, supporting a Group 8, 9 or 10 metal component on the calcined material and calcining the resulting material at 300 to 700°C.

The aluminium hydroxide and/or hydrated oxide used in the manufacture of the catalyst which is an object of the present invention can be manufactured using any of various methods. If α-alumina or γ-alumina, which are oxides of aluminium, is used instead of the aluminium hydroxide and/or hydrated oxide, the crushing strength of the catalyst will decrease, and the monoclinic zirconia will be readily contaminated during post-shaping calcination, causing a reduction in the catalytic activity.

It is desirable that the aluminum hydroxide and/or hydrated oxide be used in such an amount as to give a catalyst wherein the weight ratio of alumina to the total of alumina and zirconia is 5 to 90 wt %, preferably 5 to 50 wt %, and particularly preferably 10 to 50 wt %. When the weight ratio is below this range, the crushing strength of the catalyst will be poor and the zirconia will be unstable, while when the weight ratio is above this range, the catalytic activity will be relatively low.

It is generally preferable in order to enhance the activity and crushing strength of the catalyst that the aluminium hydroxide and/or hydrated oxide is in the form of a powder, and more preferably one having a mean particle size of 0.5 to 50 *µ*m, and particularly preferably of 0.5 to 20 *µ*m. The use of aluminum hydrated oxide having a beohmite structure (for example, pseudo-boehmite) as the aluminium hydroxide and/or hydrated oxide is preferable, because it brings about an improvement in the catalytic activity.

Although the zirconium hydroxide and/or hydrated oxide to be used in the present invention may be prepared by any process, it can generally be prepared through neutralization or hydrolysis from salts or organometallic compounds thereof; e.g. the oxychloride, alcoholate, chloride, sulfate, nitrate and oxysulfate. When the zirconium hydroxide or hydrated oxide is amorphous, i.e., has no definite crystalline structure as determined by diffractometry with X-rays or electron beams, the crushing strength of the catalyst is enhanced and the zirconia is effectively stabilized. It is generally desirable in order to enhance the crushing strength and activity of the catalyst that the zirconium hydroxide or hydrated oxide be in the form of a powder, more preferably one having a mean particle size of 0.5 to 50 *µ*m, and particularly preferably of 0.5 to 20 *µ*m.

Examples of the sulfur-containing compound for the sulfureous component according to the present invention include sulfuric acid, ammonium sulfate, sulfurous acid, ammonium sulfite, thionyl chloride, among which ammonium sulfate and ammonium sulfite are preferable by virtue of their low corrosiveness against the production unit. The sulfur-containing compound may be used as such or in the form of a solution in water or the like.

It is desirable from the standpoint of enhancing catalytic activity that the amount of the sulfur-containing compound to be added in the preparation of the catalyst is 3 to 40 wt %, and particularly preferably 10 to 30 wt %, based on the total amount of the aluminum hydroxide and/or hydrated oxide, zirconium hydroxide and/or hydrated oxide, and sulfur-containing compound before calcining. It is particularly preferable for the ammonium sulfate etc. to be used for the solid-form sulfur-containing compound.

The sulfur-containing compound may be used in a solid or a liquid form. Moreover, the solution is not particularly limited in concentration and may be selected in accordance with the quantity of liquid necessary for the subsequent kneading. It is preferable that the sulfur-containing compound be added in such an amount as to give a sulfur content of 0.2 to 10 wt %, particularly 1 to 10 wt %, in the final catalyst. The method of mixing is not particularly limited.

Any type of kneader can be used for kneading in the preparation of the catalyst as long as it is a kneader generally used for the preparation of catalysts. In general, a suitable method comprises charging the raw materials into a kneader, then adding water to the raw materials, and agitating the same with blades. The order of charging of the raw materials and additives is not particularly limited. Although water is generally added in the kneading step, when a powder in the form of a slurry is used, water does not necessarily have to be added. An organic solvent can also be added therein as a liquid other than water, and examples thereof include ethanol, isopropanol, acetone, methyl ethyl ketone and methyl isobutyl ketone. The temperature and time of kneading can be appropriately selected depending on the properties of the raw materials, i.e., the aluminum hydroxide and/or hydrated oxide, zirconium hydroxide and/or hydrated oxide, sulfur-containing compound, etc. and there are no paticular restrictions as long as these conditions will not significantly affect the intended catalyst performance. Further, acids such as nitric acid, bases such as ammonia, organic compounds, binders, ceramic fibers, surfactants and/or zeolites may also be added during the kneading step, as far as the properties of the catalyst of the present invention are secured. The catalyst of the present invention, however exhibits a sufficient strength and a high catalytic activity, even when prepared without the addition of such additives.

The shaping to be conducted after the above kneading step in the catalyst preparation may be carried out by any conventional shaping process for the preparation of catalysts. In particular, extrusion using a screw extruder or the like is favorably employed, because it permits effective shaping into arbitrary shapes including pellets and honeycombs. Although the size of the shaped material is not particularly limited, the length of the cross section of the shaped material is generally 0.2 mm or above and preferably between 0.5 and 20 mm. For example, cylindrical pellets 0.5 to 10 mm in diameter and 0.5 to 15 mm in length can usually easily be obtained. Since the crushing strength after calcination greatly depends on the conditions of the kneading, it is desirable that the amount of water, kneading time, electric energy, etc., during the above kneading are predetermined.

Since the process of the present invention does not involve the step of filtration or drying between the step of mixing and kneading a sulfur-containing compound with other materials and the step of shaping, it can be carried out by an easy and simple operation, thus having great industrial merits. Further, the process can give a shaped catalyst which is usable also in fixed-bed reactions, though the powdered catalysts of the prior art cannot be used therein.

Calcination after shaping is conducted in a gaseous atmosphere of air, nitrogen or the like at such a temperature as to give tetragonal zirconium oxide. When pseudo-boehmite alumina is used, the calcining temperature is preferably 450 to 800°C, more preferably 500 to 800°C, and particularly preferably 600 to 800°C, and the calcining time is preferably 0.1 to 20 hours. Too high a calcining temperature will enhance the content of monoclinic zirconia in the crystalline zirconium oxide to result in the ratio between the 2θ= 28.2° and 2θ= 30.2° peak areas exceeding 1, which will undesirably lead to a poor catalytic activity. On the contrary, too low a calcining temperature will fail in crystallizing the zirconium oxide, which will also undesirably lead to a poor catalytic activity.

At least one metal component selected from the group consisting of Groups 8, 9 and 10 metals to be used in the catalyst used in the present invention is preferably platinum, palladium, ruthenium, nickel or the like. The use of a compound containing such a metal is preferable to that of the metal itself. These metal compounds may be used as anhydrides or hydrates. Further, the metal compounds may be used each alone or as a mixture of two or more of same. It is preferable in the present invention that one or more of the metal compounds be used in such an amount that the total of the Groups 8, 9 and 10 elements accounts for 0.05 to 10 wt % of the final solid acid catalyst.

Although the method for supporting is not particularly limited, impregnation by spraying or dipping or ion exchange is favorably employed. It is preferable in order to enhance the activity of the catalyst that the aforedescribed supported material be calcined in a gaseous atmosphere of air, nitrogen or the like at a temperature higher than 300°C but below 700°C for 0.1 to 20 hours.

It is preferable from the standpoints of catalytic activity, strength of the shaped material and so on that the total of zirconia and alumina account for at least 70 wt %, still preferably at least 80 wt %, of the catalyst. Further, it is practically preferable that the shaped catalyst has a lateral crushing strength of 3 kg or above as determined by the use of a cylindrical pellet 1.5 mm in diameter.

### Examples

The invention shall be described in detail below by means of working examples.

### [Method of calculating the ratio of crystal species by X-ray diffractometry]

The separation of peaks of tetragonal and monoclinic crystals of zirconia in the X-ray diffraction chart of the catalyst was made and the area ratio of the peak at 2θ of 28.2° assignable to monoclinic zirconia to that at 2θ of 30.2° assignable to tetragonal zirconia (i.e., the S28.2/S30.2 ratio) was calculated. When the S28.2/S30.2 ratio was 0.02 or below, the monoclinic zirconia peak was too ambiguous to be detected. The X-ray diffraction chart was measured using a wide-angle X-ray diffractometer (Rigaku Denki (KK) RAD-1C; wavelength: 1.5406 Å).

### [Method for measuring mean particle size]

The mean particle size was determined by a wet measuring method by the use of a MICROTRAC granulometer (Nikkiso Co., Ltd.). This method comprises irradiating a flowing powder with a laser beam and conducting the particle size analysis of the powder based on the forward scattered light.

### [Method for preparing the solid acid catalyst]

Commercially available zirconium hydroxide was dried to give dry hydrated zirconia having a mean particle size of 1.2 µm. 500 g hydrated alumina (pseudo-boehmite) powder having a mean particle size of 10 *µ*m was added to 1.50 kg of the above dry hydrated zirconia powder, followed by the addition of 383 g of ammonium sulfate. The obtained mixture was kneaded in a kneader equipped with agitating blades for 45 minutes, while water was added thereto. The kneaded mixture was extruded from an extruder through a circular orifice 1.6 mm in diameter, and dried at 110°C to yield dry pellets. These dry pellets were then calcined for 2 hours at 650°C to obtain a zirconia shaped article which supported a sulfureous component. 125 ml of a chloroplatinic acid aqueous solution was added to 50 g of the zirconia shaped article, such that the amount of platinum in the catalyst comprised 0.5 %. This was then dried, and calcined for 2 hours at 550°C to yield a zirconia/alumina shaped solid acid catalyst that supported a platinum and sulfureous component.

### [Raw materials for reaction]

Light naphtha was used as the hydrocarbon raw material that was to be isomerized. The light naphtha contained 4.9 wt % butane, 56.3 wt % pentane, 32.6 wt % hexane, 2.3 wt % cyclopentane, 2.8 wt % methylcyclopentane and cyclohexane, and 1.1 wt % benzene, and the sulfur content was 1 ppm by weight or less. This light naphtha was designated as Reaction Raw Material 1. Reaction Raw Materials 2, 3, and 4 were also prepared by adding, as the sulfur components, ethyl mercaptan in amounts of 50 ppm by weight, 100 ppm by weight and 150 ppm by weight, respectively, to the light naphtha. Reaction Raw Material 5 was further prepared by adding 140 ppm by weight, in terms of sulfur content, dimethyl disulfide to the light naphtha (Reaction Raw Material 1). The hydrogen gas used in the reaction had a purity of at least 99.99 vol % and did not contain any sulfur compounds.

### [Reaction method]

A solid acid catalyst was granulated into granules having a size of 16 to 24 mesh. A fixed-bed flow reactor having a length of 50 cm and an inner diameter of 1 cm was filled with 4 ml of the granulated solid acid catalyst and following a pre-treatment, an isomerization reaction was carried out in the reactor. The pre-treatment was conducted at 200°C in hydrogen stream under atmospheric pressure.

The isomerization reaction of the hydrocarbons was conducted under the following conditions: reaction pressure (gauge): 30 kg/cm²; LHSV: 2 h⁻¹; hydrogen/hydrocarbon ratio: 2 (mol/mol); reaction temperature: 200°C. The reaction was initiated using each of Reaction Raw Materials 1 to 5 as the raw materials, and the gas discharged from the reactor 20 hours from the start of the reaction was analysed using gas chromatography. As a result of the analysis, the compositions at the outlet of the reaction tube are shown in Table 1. It is clear that the isomerization reaction was hardly affected by the sulfur component when the weight content of the sulfur in the raw material was 0 to 150 ppm. Moreover, an analysis of the ethyl mercaptans and dimethyl disulfides in the discharged gas showed that the sulfur weight content was no more than 1 ppm.

**[Table 1]**

| Reaction raw material | Sulfur content (ppm) | Composition at reaction tube outlet | |
|---|---|---|---|
| | | Isopentane/ pentane | 2,2-Dimethyl-butane/hexane |
| Reaction raw material 1 | 0 | 0.734 | 0.240 |
| Reaction raw material 2 | 50 | 0.734 | 0.239 |
| Reaction raw material 3 | 100 | 0.733 | 0.238 |
| Reaction raw material 4 | 150 | 0.732 | 0.236 |
| Reaction raw material 5 | 140 | 0.732 | 0.238 |

### INDUSTRIAL APPLICABILITY

The present invention allows hydrocarbons to be isomerized by bringing hydrogen and raw material hydrocarbons, which contain 10 to 500 ppm, in terms of sulfur weight content, of sulfur compounds, into contact with a specific solid acid catalyst, and by using this specific catalyst, isomerization can be conducted very efficiently even when sulfur compounds present. Furthermore, the sulfur compounds are decomposed during isomerization, and the resultant hydrocarbons contain virtually no organic sulfur compounds. Consequently, according to the present invention, there is no particular need to reduce the amount of sulfur compounds contained in the raw material to be isomerized, and moreover, the hydrocarbons are subjected to significant desulfurization simultaneously with the hydrocarbon isomerization.

## Claims

1. A method for isomerizing hydrocarbons, in which isomerized hydrocarbons are obtained by bringing hydrogen and raw material hydrocarbons, which contain 10 to 500 ppm, in terms of sulfur weight content, of sulfur compounds, into contact with a solid acid catalyst, said solid acid catalyst comprising a support, which comprises portions made of zirconia and/or hydrous zirconia, and a sulfureous component supported on the support.

2. The method for isomerizing hydrocarbons according to Claim 1, in which an organic sulfur compound content in the isomerized hydrocarbons as claimed in Claim 1 is 10 ppm or less, in terms of sulfur weight content.

3. The method for isomerizing hydrocarbons according to Claims 1 or 2, in which the support as claimed in Claim 1 comprises portions made of zirconia and/or hydrous zirconia and portions made of alumina and/or hydrous alumina.

4. The method for isomerizing hydrocarbons according to Claims 1 to 3, in which the solid acid catalyst as claimed in Claim 1 comprises at least one metal component selected from the group consisting of Groups 8, 9 and 10.

5. A solid acid catalyst for isomerization, comprising a support, which comprises portions made of zirconia and/or hydrous zirconia, and a sulfureous component supported on the support, wherein the solid acid catalyst is used for the isomerization of hydrocarbons to yield isomerized hydrocarbons by bringing hydrogen and raw material hydrocarbons, which contain 10 to 500 ppm, in terms of sulfur weight content, of sulfur compounds, into contact with said solid acid catalyst.
